# EUROPÄISCHE PATENTSCHRIFT

(11) **EP 1 048 678 B1**
(45) Veröffentlichungstag und Bekanntmachung des Hinweises auf die Patenterteilung: **28.12.2005**
(21) Anmeldenummer: 00109055.4
(22) Anmeldetag: 28.04.2000
(51) Int. Cl.: C08G 18/10, C08G 18/32, C08G 18/48, C08G 18/83

(54) **Reaktivpolymere and daraus erhältliche, gegenüber Isocyanaten reaktive Polymere**
Reactive polymers and isocyanate reactive polymers obtainable therefrom
Polymères réactifs et polymères réactifs avec les isocyanates obtenus de ceux-ci

(30) Priorität: 29.04.1999 DE 19919558
(43) Veröffentlichungstag der Anmeldung: 02.11.2000
(73) Patentinhaber: BASF Aktiengesellschaft, 67056 Ludwigshafen (DE)
(72) Erfinder: Bruchmann, Bernd, Dr., 67251 Freinsheim (DE); Renz, Hans, Dr., 67149 Meckenheim (DE); Lutter, Heinz-Dieter, Dr., 49356 Diepholz (DE)
(74) Vertreter: Isenbruck, Günter

(56) Entgegenhaltungen:
- DE-A- 19 524 046
- US-A- 4 002 601
- US-A- 4 349 655
- M.F.CLIFTON ET AL.: "Oligomer Engineering: Investigation of Oxazolidine Terminated Reactive Oligomers" PROC. WATER-BORNE HIGHER-SOLIDS COAT. SYMP., 1982, Seiten 177-190, XP000926593

## Beschreibung

Die Erfindung betrifft eine Verbindung der allgemeinen Formel I 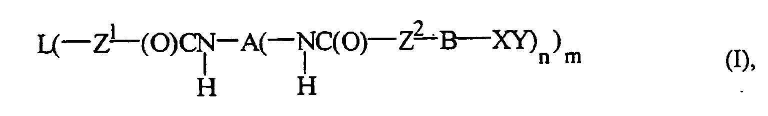 (Reaktivpolymer) worin L für ein Polymeres, XY für einen gegenüber NCO-Gruppen inerten Reaktivrest steht, der unter sauren, neutralen oder basischen Bedingungen eine oder mehrere Schutzgruppen Y freisetzt und der Rest X nach Freisetzung von Y mindestens zwei gegenüber Isocyanaten reaktive Gruppen aufweist. Weiterhin betrifft die Erfindung ein Verfahren zur Herstellung eines solchen Polymeren sowie ein Polymerpolyol, das durch Umsetzung eines Polymeren der allgemeinen Formel I mit einer Säure oder Base erhältlich ist. Die Erfindung betrifft ebenfalls ein Polyadditionsprodukt oder Polykondensationsprodukt, das unter Verwendung eines Polymerpolyols, wie es durch Behandlung eines erfindungsgemäßen Reaktivpolymeren im neutralen, sauren oder basischen Bereich erhältlich ist, herstellbar ist.

Hochfunktionelle OH- und/oder NH-Gruppen aufweisende Strukturen besitzen in der Polyurethanchemie ein hoch einzuschätzendes Anwendungspotential, speziell für die Herstellung von Polyurethanschaumstoffen, -lacken und sonstigen polyurethanhaltigen Beschichtungen. Besondere Bedeutung kommt dabei oft den sogenannten Polyurethanpräpolymeren zu, die aufgrund ihrer in der Regel geringen Viskosität häufig als Ausgangspunkt zur Synthese von hochmolekularen und gegebenenfalls vernetzten Polyurethanpolymeren eingesetzt werden. Besondere Bedeutung haben die genannten Präpolymeren beispielsweise bei der Herstellung von Oberflächenbeschichtungen oder Formkörpern.

In der Regel werden Polyurethanpräpolymere durch Umsetzung von Polyolen oder Polyaminen mit mindestens difunktionellen Isocyanaten hergestellt, wobei die Polyole oder Polyamine üblicherweise eine Funktionalität von mindestens etwa 2 aufweisen. Werden höherfunktionelle Polyurethanpräpolymere gewünscht, so existieren zu deren Herstellung verschiedene, jedoch in der Regel unbefriedigende Möglichkeiten. Beispielsweise kann als Polyol ein niedermolekulares höherfunktionelles Polyol eingesetzt werden, das anschließend mit entsprechenden difunktionellen Isocyanaten zum Präpolymeren umgesetzt wird. Nachteilig wirkt sich an dieser Vorgehensweise aus, daß das gewünschte Polyurethanpräpolymere nur ein geringes Molekulargewicht aufweist und daß als Nebenprodukt vernetzte, hochmolekulare Anteile entstehen.

Weiterhin ist es möglich, beispielsweise ein entsprechendes niedermolekulares Polyol an jeder OH-Gruppe durch eine Polyadditions- oder Polykondensationsreaktion zu verlängern. So lassen sich zwar hochmolekulare Polyole erhalten, die jedoch in jedem Polyolmolekül über eine ihrer Funktionalität entsprechende hohe Anzahl an Polymerketten verfügen, die die Eigenschaften des Polyurethanpräpolymeren oder des daraus gewonnenen Produkts gegebenenfalls in unerwünschter Weise modifizieren.

Eine weitere Möglichkeit besteht darin, ein lineares Polymeres an den Endgruppen derart zu modifizieren, daß beispielsweise die gewünschte Zahl an OH-Gruppen oder NH-Gruppen am Ende der Polymerkette erzielt wird. Zur Herstellung eines Polyesters mit jeweils zwei OH-Gruppen am Kettenende ließe sich beispielsweise ein Polyestermolekül mit jeweils einer COOH-Gruppe am Kettenende mit einem Überschuß an Trimethylolpropan umsetzen, um so zu einem Polyester zu gelangen, der an jedem Kettenende zwei OH-Gruppen trägt. In der Regel ist eine solche Umsetzung jedoch unwirtschaftlich, da überschüssiges Material aus dem Reaktionsprodukt abgetrennt werden muß. Zudem läßt es sich meist nicht vermeiden, daß zumindest ein Teil der Reaktionsprodukte mit dem als Edukt zugesetzten Polymeren reagiert und zu Kettenverlängerung oder Vernetzung führt.

Aus dem Stand der Technik sind verschiedene Typen von hochfunktionellen OH- und/oder NH-Gruppen aufweisende Strukturen bekannt. So gehören zum Beispiel mit Pentaerythrit, Sorbit oder Sucrose gestartete Polyetherpolyole auf Basis von Ethylenoxid oder Propylenoxid oder deren Gemischen zum Stand der Technik. Solche Polyetherpolyole weisen in der Regel Funktionalitäten zwischen etwa 3 und etwa 6 auf.

Aus der WO 93/14147 sind Polyamine bekannt, die eine dendrimere Struktur aufweisen. Solche Produkte sind aufwendig herzustellen, da im ersten Reaktionsschritt Acrylnitril auf ein Amin gepfropft wird und in einem anschließenden Hydrierschritt das Nitril in ein Amin umgewandelt wird. Dieses Verfahren wird mehrfach wiederholt, bis die gewünschte Funktionalität bezüglich NH₂ erreicht ist. Nachteilig wirkt sich bei diesen Produkten jedoch aus, daß sie lediglich über NH-Funktionalitäten verfügen, OH-Funktionalitäten oder gemischte, d.h. OH- und NH-Gruppen aufweisende Strukturen, sind auf diese Weise nicht zu erhalten.

Aus der WO 93/17060 sind Polyesterpolyole bekannt, die beispielsweise durch Umsetzung von TMP oder Pentaerythrit und Dimethylolpropionsäure entstehen. Die Reaktion verläuft jedoch sehr unselektiv und es werden hochverzweigte Strukturen erhalten.

Die DE-A 195 24 045 betrifft hochfunktionalisierte Polyurethane, die aus Molekülen mit den funktionellen Gruppen A(B)ₙ aufgebaut sind, wobei A eine NCO-Gruppe oder eine mit einer NCO-Gruppe reaktive Gruppe, B eine NCO-Gruppe oder eine mit einer NCO-Gruppe reaktive Gruppe, A reaktiv mit B sowie n eine natürliche Zahl und mindestens gleich 2 ist. Die offenbarten Strukturen lassen sich zur Herstellung dendrimerer Verbindungen einsetzen. Ein einfaches Verfahren zur Herstellung von Polymeren, bei dem Aufbau von Funktionalität und Aufbau von Molekulargewicht weitgehend entkoppelt sind, ist der Druckschrift nicht zu entnehmen.

US 4,349,655 offenbart Verbindungen, welche durch Umsetzung von N-Hydroxyalkyloxazolidindiisocyanat-Monoaddukten mit Hydroxy-funktionellen Polymeren erhalten werden. Gemäß Beispiel (A) werden (a) N-2-Hydroxyethyloxazolidin (HETOX) und (b) N-2-Hydroxypropyl-5-methyloxazolidin (HIPOX) eingesetzt. Verbindungen mit Dioxan- oder Dioxolangruppen werden nicht offenbart.

Es bestand demnach ein Bedürfnis nach einem Verfahren, das es erlaubt ein Polymeres auf einfache Weise derart mit Endgruppen auszustatten, daß die Zahl der Endgruppen pro Kettenende mindestens zwei beträgt und im wesentlichen keine Kettenverlängerung zwischen den einzelnen Polymermolekülen stattfindet. Weiterhin bestand ein Bedürfnis nach Verbindungen, wie sie durch ein solches Verfahren erhältlich sind.

Der Erfindung liegt daher zunächst die Aufgabe zugrunde, eine polymere Verbindung zur Verfügung zu stellen, die sich durch eine einfache chemische Reaktion in ein Molekül umwandeln läßt, das pro Molekül mindestens zwei gegenüber NCO-Gruppen reaktive funktionelle Gruppen aufweist. Weiterhin war es Aufgabe der Erfindung, ein Verfahren zur Herstellung einer solchen Verbindung zur Verfügung zu stellen. Darüber hinaus bestand eine Aufgabe der Erfindung darin, ein einfaches Verfahren zur Vervielfachung der Zahl der gegenüber Isocyanaten reaktiven Endgruppen in von Urethangruppen freien mit NCO-reaktiven Polymeren zur Verfügung zu stellen.

Die genannten Aufgaben werden durch eine Verbindung der allgemeinen Formel I 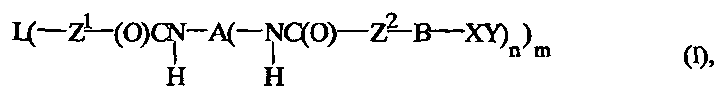 gemäß dem nachfolgenden Text gelöst.

Gegenstand der Erfindung ist demnach eine Verbindung der allgemeinen Formel I 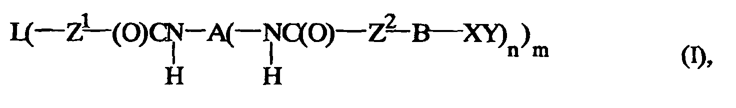 wobei L für ein von Urethangruppen freies Polymeres mit einem Molekulargewicht Mₙ von mindestens 300, oder eine beliebige lineare oder verzweigte Abfolge von zwei oder mehr solcher Polymerer, A für eine substituierte oder unsubstituierte, lineare oder verzweigte, gesättigte oder ungesättigte Alkylengruppe mit 2 bis 12 C-Atomen oder eine substituierte oder unsubstituierte gesättigte oder ungesättigte Cycloalkylengruppe oder eine substituierte oder unsubstituierte Arylengruppe mit 3 bis 18 C-Atomen oder eine Arylenalkylengruppe mit 7 bis 18 C-Atomen oder eine heterocyclische Gruppe oder eine beliebige lineare oder verzweigte Abfolge von zwei oder mehr der genannten Gruppen steht, Z¹ und Z² jeweils unabhängig voneinander für NR, S oder O, R für H, CH₃ oder eine substituierte oder unsubstituierte, lineare oder verzweigte, gesättigte oder ungesättigte Alkylgruppe mit 2 bis 12 C-Atomen oder eine substituierte oder unsubstituierte gesättigte oder ungesättigte Cycloalkylgruppe oder eine substituierte oder unsubstituierte Arylgruppe mit 3 bis 18 C-Atomen, oder eine beliebige lineare oder verzweigte Abfolge von zwei oder mehr der genannten Gruppen, B für eine kovalente Bindung, für CH₂ oder eine substituierte oder unsubstituierte, lineare oder verzweigte, gesättigte oder ungesättigte Alkylengruppe mit 2 bis 12 C-Atomen oder eine substituierte oder unsubstituierte gesättigte oder ungesättigte Cycloalkylengruppe oder eine substituierte oder unsubstituierte Arylengruppe mit 3 bis 18 C-Atomen, oder eine beliebige lineare oder verzweigte Abfolge von zwei oder mehr der genannten Gruppen, n für eine Zahl von 1 bis 20, m für eine Zahl von 1 bis 50 und XY für einen gegenüber NCO-Gruppen inerten Reaktivrest steht, wobei der Reaktivrest unter sauren, neutralen oder basischen Bedingungen eine oder mehrere Schutzgruppen Y freisetzt und der Rest X nach Freisetzung von Y mindestens zwei gegenüber Isocyanaten reaktive Gruppen aufweist, wobei die Verbindung als Reaktivrest XY eine Dioxan- oder Dioxolangruppe aufweist.

Unter einem "Reaktivrest" wird im Rahmen der vorliegenden Ausführungsform ein Rest verstanden, der durch eine einfache chemische Reaktion, beispielsweise durch Behandlung mit einer Säure oder einer Base, eine chemische Umwandlung eingeht, wobei der so behandelte Reaktivrest nach der chemischen Umwandlung mindestens zwei gegenüber Isocyanaten reaktionsfähige Gruppen aufweist. In einer bevorzugten Ausführungsform der Erfindung enthält der Reaktivrest mindestens zwei mit einer Schutzgruppe versehene funktionelle Gruppen, die nach Abspaltung der Schutzgruppe gegenüber Isocyanaten reaktiv sind.

Gemäß Formel I weist das erfindungsgemäße Reaktivpolymere einen Rest L auf, der für ein von Urethangruppen freies Polymeres mit einem Molekulargewicht von mindestens etwa 300 steht. In einer bevorzugten Ausführungsform der vorliegenden Erfindung steht L für einen Polyester, ein Polyamin, ein Polyamid, ein Polycarbonat, einen Polyether, ein Polyacrylat, ein Polymethacrylat, ein Polysilan, ein Polysilazan, ein Polysiloxan, einen aliphatischen oder aromatischen gesättigten oder ungesättigten Kohlenwasserstoff oder ein Polysulfon.

In einer ersten bevorzugten Ausführungsform der vorliegenden Erfindung steht L für einen Polyesterrest, der eine ursprüngliche Funktionalität gegenüber NCO-Gruppen von m aufwies. Geeignet sind beispielsweise Polyester, die ursprünglich etwa eine oder mehrere OH-Gruppen, eine oder mehrere NH₂- oder NHR-Gruppen oder ein Gemisch aus zwei oder mehr davon, oder eine oder mehrere SH-Gruppen, oder ein Gemisch aus zwei oder mehr der genannten Gruppen, aufwiesen.

Die Darstellung von im Rahmen der vorliegenden Erfindung geeigneten Polyestern ist beispielsweise aus der Fachliteratur bekannt, auf die in diesem Zusammenhang besonders verwiesen wird. Besonders geeignete Polyester werden beispielsweise in G. W. Becker, D. Braun, Kunststoffhandbuch Nr. 7, Polyurethane, Carl Hanser-Verlag, München 1993, beschrieben.

In einer weiteren bevorzugten Ausführungsform der vorliegenden Erfindung steht L für einen Polyamidrest, der eine ursprüngliche Funktionalität gegenüber NCO-Gruppen von m aufwies. Geeignet sind beispielsweise Polyamide, die ursprünglich etwa eine oder mehrere OH-Gruppen, eine oder mehrere NH₂- oder NHR-Gruppen oder ein Gemisch aus zwei oder mehr davon, oder eine oder mehrere SH-Gruppen, oder ein Gemisch aus zwei oder mehr der genannten Gruppen, aufwiesen.

Die Darstellung von im Rahmen der vorliegenden Erfindung geeigneten Polyamiden ist beispielsweise aus der Fachliteratur bekannt, auf die in diesem Zusammenhang besonders verwiesen wird. Besonders geeignete Polyamide werden beispielsweise in G. W. Becker, D. Braun, Kunststoffhandbuch Nr. 3/4 Polyamide, Carl Hanser-Verlag, München 1998, beschrieben.

In einer weiteren bevorzugten Ausführungsform der vorliegenden Erfindung steht L für einen Polycarbonatrest, der eine ursprüngliche Funktionalität gegenüber NCO-Gruppen von m aufwies. Geeignet sind beispielsweise Polycarbonate, die ursprünglich etwa eine oder mehrere OH-Gruppen, eine oder mehrere NH₂- oder NHR-Gruppen oder ein Gemisch aus zwei oder mehr davon, oder eine oder mehrere SH-Gruppen, oder ein Gemisch aus zwei oder mehr der genannten Gruppen, aufwiesen.

Die Darstellung von im Rahmen der vorliegenden Erfindung geeigneten Polycarbonaten ist beispielsweise aus der Fachliteratur bekannt, auf die in diesem Zusammenhang besonders verwiesen wird. Besonders geeignete Polycarbonate wercarbonate, Polyacetale, Polyester, Celluloseester, Carl Hanser-Verlag, München 1992, beschrieben.

In einer weiteren bevorzugten Ausführungsform der vorliegenden Erfindung steht L für einen Polyetherrest, der eine ursprüngliche Funktionalität gegenüber NCO-Gruppen von m aufwies. Geeignet sind beispielsweise Polyether, die ursprünglich etwa eine oder mehrere OH-Gruppen, eine oder mehrere NH₂- oder NHR-Gruppen oder ein Gemisch aus zwei oder mehr davon, oder eine oder mehrere SH-Gruppen, oder ein Gemisch aus zwei oder mehr der genannten Gruppen, aufwiesen. Besonders geeignet sind in diesem Zusammenhang beispielsweise Polyethylenoxide, Polypropylenoxide, Polybutylenoxide, Polytetrahydrofuran deren Gemische und Copolymere, die sowohl statistisch als auch blockweise aufgebaut sein können.

Die Darstellung von im Rahmen der vorliegenden Erfindung geeigneten Polyethern ist beispielsweise aus der Fachliteratur bekannt, auf die in diesem Zusammenhang besonders verwiesen wird. Besonders geeignete Polyether werden beispielsweise in G. W. Becker, D. Braun, Kunststoffhandbuch Nr. 7, Polyurethane, Carl Hanser-Verlag, München 1993, beschrieben.

In einer weiteren bevorzugten Ausführungsform der vorliegenden Erfindung steht L für einen Polyacrylat- oder Polymethacrylatrest, der, vor Anwendung des erfindungsgemäßen Verfahrens, eine ursprüngliche Funktionalität gegenüber NCO-Gruppen von m aufwies. Geeignet sind beispielsweise Polyacrylate oder Polymethacrylate, die ursprünglich etwa eine oder mehrere OH-Gruppen, eine oder mehrere NH₂- oder NHR-Gruppen oder ein Gemisch aus zwei oder mehr davon, oder eine oder mehrere SH-Gruppen, oder ein Gemisch aus zwei oder mehr der genannten Gruppen, aufwiesen.

Die Darstellung von im Rahmen der vorliegenden Erfindung geeigneten Polyacrylaten und Polymethacrylaten ist beispielsweise aus der Fachliteratur bekannt, auf die in diesem Zusammenhang besonders verwiesen wird. Besonders geeignete Polyacrylate und Polymethacrylate werden beispielsweise in Kittel, Lehrbuch der Lacke und Beschichtungen, Band 2, Bindemittel für lösemittelhaltige und lösemittelfreie Systeme, S. Hirzel-Verlag, Stuttgart 1998, beschrieben.

In einer weiteren bevorzugten Ausführungsform steht L für eine hoch- und hyperverzweigte Struktur oder dendrimere Struktur, wie sie z. B. beschrieben sind in G. R. Newkome, C. N. Moorefield, F. Vögtle, Dendritic Molecules, Verlag Chemie, Weinheim 1996.

Der Buchstabe Z¹ steht in Formel I für NR, S oder O. In einer bevorzugten Ausführungsform der vorliegenden Erfindung steht Z¹ für NR oder O. Der Rest R steht dabei vorzugsweise für H oder einen linearen Alkylrest mit 1 bis etwa 6 C-Atomen, beispielsweise für einen Methyl-, Ethyl-, Propyl-, Butyl-, Pentyl- oder Hexylrest.

Der Buchstabe m steht in einer bevorzugten Ausführungsform der vorliegenden Erfindung für ein Zahl von 1 bis etwa 50, insbesondere für etwa 2 bis etwa 20, oder etwa 3 bis etwa 15, beispielsweise etwa 4, 5, 6, 8, 10, 11, 12, 13 oder 14. Besonders bevorzugt ist es, wenn m beispielsweise für etwa 2 bis etwa 10 steht. Gegebenenfalls kann es sich bei den Zahlen für m auch um nicht natürliche Zahlen handeln, beispielsweise, wenn als Polymeres ein technisches Gemisch aus Polymeren mit unterschiedlicher Funktionalität eingesetzt wird.

Das Molekulargewicht Mₙ des Restes L beträgt in einer bevorzugten Ausführungsform der Erfindung mindestens etwa 300. Je nach gewünschter Anwendung des Reaktivpolymeren und der Natur des polymeren Restes L kann das Molekulargewicht stark variieren. Es kann dabei bis zu etwa 2.000.000, oder sogar darüber, betragen. Beispiele für im Rahmen der vorliegenden Erfindung geeignete Molekulargewichte des Restes L sind etwa 300 bis etwa 1.000.000, etwa 500 bis etwa 500.000, etwa 800 bis etwa 200.000 oder etwa 1.000 bis etwa 100.000. Je nach geplanter Verwendung des Reaktivpolymeren sind auch beliebige dazwischen liegende Molekulargewichte geeignet, beispielsweise etwa 1.500 bis etwa 50.000 oder etwa 2.000 bis etwa 20.000 oder etwa 3.000 bis etwa 10.000.

In einer weiteren bevorzugten Ausführungsform der vorliegenden Erfindung beträgt das Äquivalentgewicht pro funktioneller, mit Isocyanaten reaktiver Gruppe mindestens etwa 50, in einer bevorzugten Ausführungsform jedoch mehr, beispielsweise mindestens etwa 100 oder mindestens etwa 200. Auch darüberliegende Werte sind geeignet, beispielsweise etwa 500, 800, 1.000, 1.500, 2.500 oder 4.000.

In einer weiteren bevorzugten Ausführungsform der Erfindung steht A für eine Alkylengruppe, Cycloalkylengruppe, Arylengruppe, Arylenalkylengruppe oder eine heterocyclische Gruppe, gemäß den Kerngruppen üblicherweise in der Polyurethanchemie eingesetzter Polyisocyanate. Beispiele für solche Isocyanate sind 2,4-Toluylendiisocyanat (2,4-TDI), 2,6-Toluylendiisocyanat (2,6-TDI), oder ein Gemisch der genannten Isomeren, 2,2'-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (NDI), 1,4-Phenylendiisocyanat, 1,3-Tetramethylxylylendiisocyanat (TMXDI), hydriertes MDI (HMDI), Isophorondiisocyanat (IPDI), Hexamethylendiisocyanat-1,6 (HDI), 2-Isocyanatopropylcyclohexylisocyanat (IPCI), 2-Butyl-2-ethyl-pentamethylendiisocyanat (BEPDI), Lysindiisocyanat (LDI), 1,12-Dodecyldiisocyanat, Cyclohexyl-1,3- oder -1,4-diisocyanat, 2-Methylpentamethylendiisocyanat (MPDI) oder dergleichen. Ebenfalls geeignet sind Dimerisierungs- oder Trimerisierungsprodukte von Diisocyanaten, beispielsweise enthaltend Urethan-, Allophanat-, Harnstoff-, Biuret-, Uretdion-, Carbodiimid- oder Uretonimingruppen, wie sie durch Dimerisierung oder Trimerisierung der oben genannten Diisocyanate entstehen. Weiterhin geeignet sind oligomere oder polymere Isocyanatgruppen tragende Verbindungen, wie sie beispielsweise bei der Isocyanatherstellung anfallen oder als Restprodukte bei der Destillierung von Isocyanatrohprodukten im Destillationssumpf verbleiben. Beispiele für in diesem Zusammenhang besonders geeignete Materialien sind Roh-MDI, wie es direkt nach der Herstellung von MDI erhältlich ist, und Polymer-MDI, wie es nach der Destillation von MDI aus dem Roh-MDI im Destillationssumpf verbleibt.

Der Buchstabe A in Formel I steht demnach in einer bevorzugten Ausführungsform der vorliegenden Erfindung für einen der in den oben genannten Polyisocyanaten die NCO-Gruppen tragenden Reste.

Der Buchstabe Z² steht in Formel I für NR, S oder O. In einer bevorzugten Ausführungsform der vorliegenden Erfindung steht Z² für NR oder O. Der Rest R steht dabei vorzugsweise für H oder einen linearen Alkylrest mit 1 bis etwa 6 C-Atomen, beispielsweise für einen Methyl-, Ethyl-, Propyl-, Butyl-, Pentyl- oder Hexylrest.

Der Buchstabe B in der Formel I steht in einer bevorzugten Ausführungsform der vorliegenden Erfindung für einen linearen Alkylenrest mit 1 bis 4 C-Atomen, beispielsweise für einen Methylen-, Ethylen-, Propylen- oder Butylenrest.

Der Buchstabe n steht in der Formel I in einer bevorzugten Ausführungsform der vorliegenden Erfindung für eine Zahl von 1 bis etwa 5.

Der Buchstabe m steht in der Formel I in einer bevorzugten Ausführungsform der vorliegenden Erfindung für eine Zahl von 2 bis etwa 30.

Die Buchstaben XY stehen in der Formel I für einen gegenüber NCO-Gruppen inerten Reaktivrest. Reaktivrest XY setzt unter sauren, neutralen oder basischen Bedingungen eine oder mehrere Schutzgruppen Y frei, wobei der Rest X nach Freisetzung von Y mindestens zwei gegenüber Isocyanaten reaktive Gruppen aufweist. In einer bevorzugten Ausführungsform steht XY für 2,2-Dimethyl-1,3-dioxolan oder 2,2-Dimethyl-5-ethyl-1,3-dioxan, wobei eine kovalente Bindung zum Rest B bei den als bevorzugte Ausführungsform angegebenen Reaktivresten jeweils in 4-Stellung, 5-Stellung und 1-Stellung erfolgt.

Das erfindungsgemäße Reaktivpolymere weist als Reaktivrest XY eine Dioxan- oder Dioxolangruppe auf.

In einer weiteren bevorzugten Ausführungsform der vorliegenden Erfindung steht Z² für O.

In einer weiteren bevorzugten Ausführungsform der Erfindung steht B für CH₂ oder einen linearen Alkylrest mit 2 bis etwa 6 C-Atomen.

In einer weiteren bevorzugten Ausführungsform der Erfindung steht XY für einen Rest der folgenden Formeln II oder III: 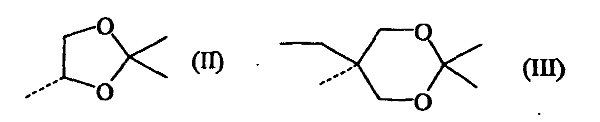 worin die gestrichelten Linien diejenige Position angeben, an der die kovalente Bindung zu B angreift.

Die erfindungsgemäßen Reaktivpolymeren lassen sich in einer ein- oder mehrstufigen Reaktion erhalten. Wird die Reaktion in mehreren Stufen durchgeführt, so erfolgt in einer ersten Stufe in der Regel die Umsetzung eines mindestens zwei NCO-Gruppen aufweisenden Isocyanats der allgemeinen Formel V

A(-NCO)ₙ (V)

mit mindestens einer Verbindung der allgemeinen Formel VI

HZ²-B-XY (VI),

worin A, Z², B, X ,Y und n die oben angegebene Bedeutung haben.

Bei dieser Umsetzung beträgt üblicherweise das Verhältnis von mit Isocyanaten reaktiven Gruppen HZ² zu Isocyanatgruppen etwa 0,05 : 1 bis etwa 0,6 : 1.

Als Isocyanat der allgemeinen Formel V eignen sich alle bereits oben angegebenen Isocyanate mit mindestens zwei NCO-Gruppen.

Als Verbindung der allgemeinen Formel VI eignen sich insbesondere Verbindungen, in denen Z² für NR oder O, insbesondere O steht. Zum Einsatz als Verbindungen der allgemeinen Formel VI geeignet sind beispielsweise 2,2-Dimethyl-4-hydroxymethyl-1,3-dioxolan (siehe Formel VII), dessen Herstellung in der DE 19 647 395 beschrieben wird, oder 2,2-Dimethyl-5-ethyl-5-hydroxymethyl-1,3-dioxan (Formel VIII), dessen Herstellung in der DE 19 647 395 beschrieben wird.

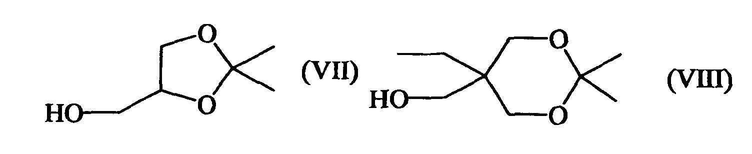

Die Umsetzung erfolgt unter üblichen Bedingungen, wie sie bei der Reaktion von NCO-Gruppen mit gegenüber NCO-Gruppen reaktiven Gruppen üblicherweise vorliegen und dem Fachmann bekannt sind. In einer bevorzugten Ausführungsform steht in der allgemeinen Formel V n für eine Zahl von 2 bis etwa 20, insbesondere für 2 bis etwa 6.

Die Umsetzung findet in der Regel bei 60 °C statt, wobei das entsprechende Isocyanat in der Regel vorgelegt und die Verbindung der allgemeinen Formel VI, oder ein Gemisch aus zwei oder mehr solcher Verbindungen zugegeben wird. Wenn das Isocyanat der allgemeinen Formel V ein aliphatisches Isocyanat ist, kann beispielsweise zusätzlich zur Unterstützung der Reaktion mit der Verbindung der allgemeinen Formel VI ein Katalysator oder ein Gemisch aus zwei oder mehr Katalysatoren zugegeben werden. Geeignete Katalysatoren sind dem Fachmann bekannt. In einer bevorzugten Ausführungsform der Erfindung wird als Katalysator Dibutylzinndilaurat eingesetzt. Die Katalysatormenge, bezogen auf Isocyanat, beträgt in der Regel etwa 10 bis etwa 10.000 ppm, beispielsweise etwa 200 bis etwa 1.000 ppm.

Die Umsetzung verläuft in der Regel exotherm und kann durch entsprechende Kühlung während der Reaktion isotherm gerührt werden. Es ist jedoch ebenso möglich, daß die Temperatur des Reaktionsgemisches im Verlauf der Umsetzung auf eine höhere Temperatur ansteigt, beispielsweise auf etwa 80 °C.

Nach vollständiger Zugabe der Reaktanden kann die Reaktion entweder sofort abgebrochen werden oder es kann beispielsweise noch für einen Zeitraum von etwa zehn Minuten bis etwa fünf Stunden nachreagiert werden. Vorzugsweise geschieht dies unter Rühren. Das entstandene Reaktionsgemisch kann anschließend aufgearbeitet werden, in der Regel jedoch erst nach Abkühlung des Reaktionsgemischs. Die Isolierung des Reaktionsprodukts der ersten Stufe kann an dieser Stelle durch übliche Methoden, beispielsweise durch Kristallisation, Destillation oder ähnliche Methoden erfolgen.

Das in der ersten Stufe entstandene Reaktionsprodukt wird anschließend in einer zweiten Stufe mit einem Polymeren der allgemeinen Formel X

L(Z¹H)ₘ (X)

umgesetzt, wobei L und Z¹ die oben genannte Bedeutung aufweisen. Die Umsetzung findet in der Regel bei etwa 0 bis etwa 80 °C, beispielsweise bei etwa 25, 50, 60 oder 70 °C statt, wobei das Reaktionsprodukt aus der ersten Stufe in der Regel vorgelegt und das Polymere der allgemeinen Formel X, oder ein Gemisch aus zwei oder mehr solcher Verbindungen, über einen variablen Zeitraum zugegeben wird. Wenn das Reaktionsprodukt der ersten Stufe fest ist oder eine zu hohe Viskosität aufweist, so kann die Reaktion beispielsweise in einem Lösemittel durchgeführt werden. Geeignete Lösemittel sind inert gegenüber den an der Umsetzung beteiligten funktionellen Gruppen und dem Fachmann bekannt. Gegebenenfalls kann zusätzlich zur Unterstützung der Reaktion mit dem Polymeren der allgemeinen Formel X ein Katalysator oder ein Gemisch aus zwei oder mehr Katalysatoren zugegeben werden. Geeignete Katalysatoren sind dem Fachmann bekannt. In einer bevorzugten Ausführungsform der Erfindung wird als Katalysator Dibutylzinndilaurat eingesetzt. Die Katalysatormenge, bezogen auf Isocyanat, beträgt in der Regel etwa 10 bis etwa 10.000 ppm, beispielsweise etwa 200 bis etwa 1.000 ppm.

Die Umsetzung verläuft in der Regel exotherm, und kann durch entsprechende Kühlung während der Reaktion isotherm geführt werden. Es ist jedoch ebenso möglich, daß die Temperatur des Reaktionsgemisches im Verlauf der Umsetzung auf eine höhere Temperatur ansteigt, beispielsweise auf etwa 80 bis etwa 100°C.

Nach vollständiger Zugabe der Reaktanden kann die Reaktion entweder sofort abgebrochen werden oder es kann beispielsweise noch für einen Zeitraum von etwa zehn Minuten bis etwa fünf Stunden nachreagiert werden. Vorzugsweise geschieht dies unter Rühren.

Die gesamte Reaktion kann, wie beschrieben, in mehreren Stufen durchgeführt werden. Es ist jedoch ebenso möglich, die Reaktion in einer einzigen Stufe, d.h., in einem einzigen Reaktionsgefäß durchzuführen, wobei beispielsweise zunächst das Isocyanat vorgelegt wird und anschließend die weiteren Reaktionspartner gleichzeitig oder nacheinander zugegeben werden.

Das entstandene reaktionsprodukthaltige Gemisch kann anschließend zur Isolierung des erfindungsgemäßen Reaktivpolymeren der allgemeinen Formel I aufgearbeitet werden, wobei die Aufarbeitung zweckmäßigerweise unter Bedingungen erfolgt, die nicht zu einer Öffnung der Reaktivgruppe XY führt. Geeignete Aufarbeitungsmethoden, beispielsweise unter Ausschluß von Feuchtigkeit oder unter sauren, basischen oder neutralen Bedingungen, sind dem Fachmann bekannt.

Darüber hinaus ist es jedoch ebenfalls möglich, eine Öffnung der Reaktivgruppe direkt im Anschluß an die Herstellung des erfindungsgemäßen Reaktivpolymeren durchzuführen. Hierzu wird das reaktionsprodukthaltige Gemisch Bedingungen ausgesetzt, die zu einer Öffnung der Reaktivgruppe unter Abspaltung der Schutzgruppe führen.

Gegenstand der vorliegenden Erfindung ist demnach auch ein Verfahren zur Herstellung eines Reaktivpolymeren, dadurch gekennzeichnet, daß ein mindestens zwei NCO-Gruppen aufweisendes Isocyanat der allgemeinen Formel V

A(-NCO)ₙ (V)

mit mindestens einer Verbindung der allgemeinen Formel VI

ù HZ²-B-XY (VI),

worin A, Z², B, X ,Y und n die oben angegebene Bedeutung haben, und einem Polymeren der allgemeinen Formel X

L(Z¹H)ₘ (X),

wobei L und Z¹ die oben genannte Bedeutung aufweisen, in einer oder mehreren aufeinanderfolgenden Stufen miteinander umgesetzt werden, wobei das molare Verhältnis von HZ²-Gruppen zu NCO-Gruppen jeweils etwa 0,4 : 1 bis 0,6 : 1, das molare Verhältnis von HZ¹-Gruppen zu NCO-Gruppen etwa 0,1 : 1 bis 10 : 1, und das Gesamtverhältnis von HZ¹- und HZ²-Gruppen zu NCO-Gruppen etwa 0,5 : 1 bis 10 : 1 beträgt.

Die erfindungsgemäßen Reaktivpolymeren können, wie oben bereits angedeutet, beispielsweise durch eine einfache Reaktion mit einer Säure oder einer Base, vorzugsweise mit einer Säure, zu Polymeren umgesetzt werden, die mindestens vier gegenüber NCO-Gruppen reaktive funktionelle Gruppen aufweisen. Die Zahl der gegenüber NCO-Gruppen reaktiven funktionellen Gruppen ist bei den erfindungsgemäßen Polymerverbindungen in einer bevorzugten Ausführungsform der Erfindung genau verdoppelt.

Gegenstand der vorliegenden Erfindung ist demnach auch eine Polymerverbindung mit mindestens vier Urethan- oder Harnstoffgruppen, herstellbar durch Umsetzung eines Reaktivpolymeren der allgemeinen Formel I 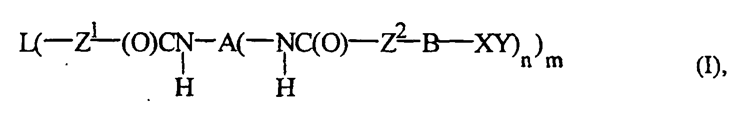 mit einer Säure oder einer Base, wobei L, Z¹, Z², A, B, X, Y, n und m die oben angegebene Bedeutung haben.

Das erfindungsgemässe Verfahren eignet sich zudem dazu, bei von Urethangruppen freien Polymeren der oben angegebenen Art, die mindestens eine gegenüber Isocyanaten reaktive funktionelle Gruppe aufweisen, die Zahl der gegenüber Isocyanaten reaktiven Gruppen genau zu verdoppeln.

Gegenstand der vorliegenden Erfindung ist demnach auch ein Verfahren zur Verdoppelung von gegenüber Isocyanaten reaktiven Gruppen in von Urethangruppen freien Polymeren, bei dem ein von Urethan- oder Harnstoffgruppen freies Polymeres der allgemeinen Formel X

L(Z¹H)ₘ (X),

mit einer Verbindung der allgemeinen Formel XI 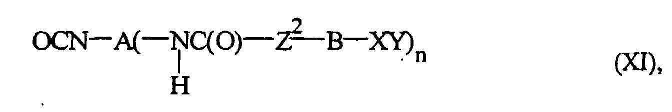 umgesetzt wird.

Die Verbindung der allgemeinen Formel XI ist dabei nach dem im Rahmen des vorliegenden Textes beschriebenen Verfahren zur Durchführung der ersten Stufe erhältlich.

Gegenstand der vorliegenden Erfindung ist damit ebenfalls die Verwendung einer Verbindung der allgemeinen Formel XI zur Verdoppelung der Zahl der gegenüber Isocyanaten reaktiven funktionellen Gruppen in von Urethangruppen freien Polymeren, die mindestens eine gegenüber Isocyanaten reaktive funktionelle Gruppe aufweisen.

Die erfindungsgemäßen Polymerverbindungen mit mindestens vier Urethan- oder Harnstoffgruppen eignen sich zur Herstellung von Polyadditionsprodukten oder Polykondensationsprodukten. Geeignete Polyadditionsprodukte stellen beispielsweise Polyurethane oder Polyether dar. Geeignete Polykondensationsprodukte sind beispielsweise Polyester oder Polyamide. Gegenstand der vorliegenden Erfindung ist demnach auch ein Polyadditionsprodukt oder Polykondensationsprodukt, herstellbar unter Verwendung einer erfindungsgemäßen Polymerverbindung mit mindestens zwei Urethangruppen und der, bezogen auf Urethangruppen, doppelten Anzahl an gegenüber NCO-Gruppen reaktiven funktionellen Gruppen.

Die Erfindung wird nachfolgend durch Beispiele näher erläutert.

### Beispiele

### 1. Für die Synthese verwendete cyclische Ketale bzw. Oxazolidine

Eine Liste der eingesetzten heterocyclischen Verbindungen ist in der folgenden Tabelle dargestellt.

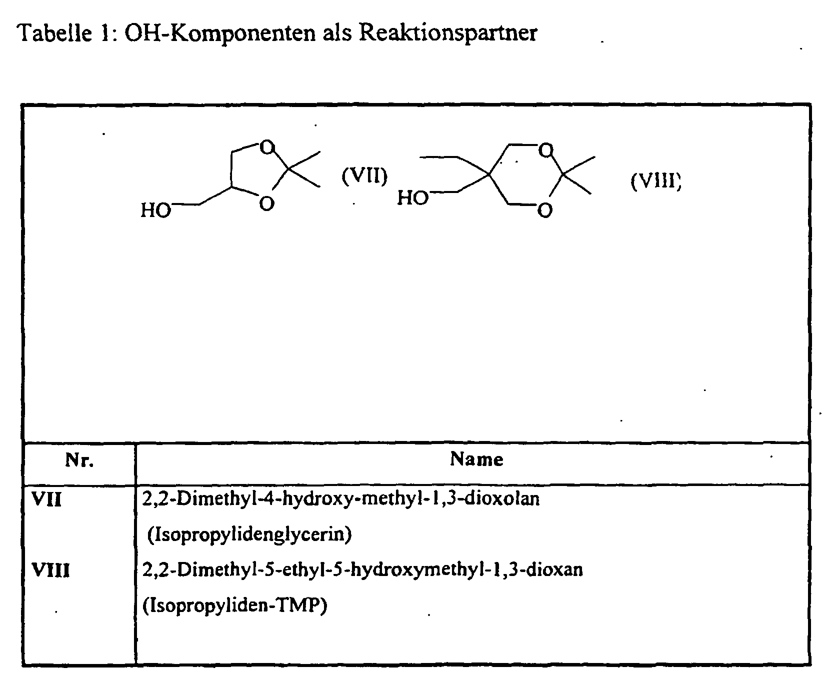

### 2. Monourethane aus HDI

1680 g HDI (10 mol) und 0,84 g Dibutylzinndilaurat (500 ppm bezogen auf HDI) wurden unter Stickstoffbedeckung vorgelegt und auf 50°C erwärmt. Bei dieser Temperatur wurden innerhalb von 30 Minuten 2 mol der OH-Komponente nach Tabelle 1 zugetropft. Man ließ 30 Minuten bei 50°C nachreagieren. Anschließend wurde das Produkt durch Destillation am Dünnschichtverdampfer bei 135°C und 2,5 mbar von monomerem HDI befreit. Der Restmonomergehalt des Endproduktes lag bei weniger als 0,5% HDI. Die Daten der Produkte sind Tabelle 2 zu entnehmen.

### 3. Monourethane aus den aromatischen Diisocyanaten TDI und MDI

Das aromatische Diisocyanat wurde unter Stickstoffbedeckung vorgelegt, auf 80°C aufgeheizt und die OH-Komponente nach Tabelle 1 bei dieser Temperatur innerhalb von 30 Minuten zugetropft. Anschließend ließ man 60 Minuten bei 80°C nachreagieren. Das Molverhältnis zwischen Isocyanat und OH-Komponente betrug 1 : 1. Als Nebenprodukt trat neben dem monomeren Isocyanat das Diurethan auf. Die Daten sind Tabelle 2 zu entnehmen.

**Tabelle 2:**

| Ausgangsprodukte und Daten der Monourethane | | | | | |
|---|---|---|---|---|---|
| **Produkt Nr.** | **Isocyanat** | **Alkohol (siehe Tab. 1)** | **Produktviskosität (mPas)** | **Herstellung** | **NCO- Gehalt (%)** |
| 1 | HDI | VII | 174 (25°C) | AV 1 | 14,0 |
| 2 | HDI | VIII | 1690 (25°C) | AV 1 | 12,3 |
| 4 | 2,4-TDI | VII | 1200 (50°C) | AV 2 | 12,7 |
| 5 | 4,4'-MDI | VIII | Schmelzpunkt 93°C | AV 2 | 9,9 |
| HDI = 1 ,6-Hexarnethylendiisocyanat | | | | | |
| 2,4-TDI = 2,4-Toluylendiisocyanat | | | | | |
| 4,4'-MDI = 4,4 '-Diphenylmethandiisocyanat | | | | | |
| AV = Arbeitsverschrift | | | | | |

### 4. Herstellung der Reaktivpolyurethane

Das Monourethan aus Diisocyanat und geschütztem Triol bzw. geschütztem Aminoalkohol, gegebenenfalls gelöst in trockenem THF, wurde vorgelegt, auf 60°C erwärmt und bei dieser Temperatur ein Polymerpolyol gemäß Tabelle 3 innerhalb 30 Minuten zugegeben. Die Zugabemenge wurde so berechnet, daß pro Mol der NCO-Gruppen ein Mol OH-Gruppen eingesetzt wurde. Bei aliphatischen Monourethanen wurden zusätzlich 500 ppm (bezogen auf das Polymerpolyol) Dibutylzinndilaurat als Katalysator eingesetzt. Das Produktgemisch wurde nach der Zugabe des Polyols noch 3 h bei 60°C gerührt. Nach dem Abkühlen wurde eine Mischung aus 85 Vol.-% Methanol und 15 Vol.-% destilliertem Wasser zugegeben, wobei die Mischung zuvor mit konzentrierter Salzsäure auf einen pH-Wert von 2 eingestellt worden war. Bei der Hydrolyse des Oxazolidins (Produkt 10 in Tabelle 3) wurde auf die Zugabe von Salzsäure verzichtet. Das Produktgemisch wurde 8 h unter Rückfluß gehalten, danach wurden die mit HCl behandelten Produkte mit Ammoniumcarbonat neutralisiert und filtriert. Anschließend wurde das Lösemittelgemisch zunächst bei Normaldruck und dann bei 3 mbar entfernt. Die entsprechenden Produktdaten sind Tabelle 3 zu entnehmen.

**Tabelle 3**

| Produkt Nr. | Polyol | Isocyanat (Tab. 2) | Produktviskosität (23°C) | Mittlere Funktionalität |
|---|---|---|---|---|
| 6 | A | 1 | 550 (80% in Methanol) | 4 OH |
| 7 | A | 2 | 20100 | 4 OH |
| 8 | B | 1 | 5220 (70 % in Methanol) | 6 OH |
| 9 | B | 2 | 22300 | 6 OH |
| 10 | C | 3 | T_{g}<0°C | 2 OH, 2 NH |

| | | | | |
|---|---|---|---|---|
| Polyole: A: Polyoxypropylendiol, OH-Zahl = 56 mg KOH/g, mittleres Molekulargewicht = 2004 g/mol | | | | |
| B: Polyoxypropylenpolyoxyethylentriol (EO-Anteil = 75 %), OH-Zahl = 24 mg KOH/g, mittleres Molekulargewicht = 7013 g/mol | | | | |
| C: Polytetrahydrofuran, OH-Zahl = 173 mg KOH/g, mittleres Molekulargewicht = 649 g/mol | | | | |

## Patentansprüche

1. Verbindung der allgemeinen Formel I 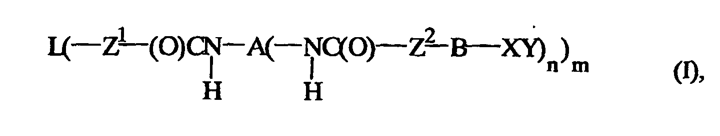 wobei L für ein von Urethangruppen freies Polymeres mit einem Molekulargewicht Mₙ von mindestens 300, oder eine beliebige lineare oder verzweigte Abfolge von zwei oder mehr solcher Polymerer, A für eine substituierte oder unsubstituierte, lineare oder verzweigte, gesättigte oder ungesättigte Alkylengruppe mit 2 bis 12 C-Atomen oder eine substituierte oder unsubstituierte gesättigte oder ungesättigte Cycloalkylengruppe oder eine substituierte oder unsubstituierte Arylengruppe mit 3 bis 18 C-Atomen oder eine Arylenalkylengruppe mit 7 bis 18 C-Atomen oder eine heterocyclische Gruppe oder eine beliebige lineare oder verzweigte Abfolge von zwei oder mehr der genannten Gruppen steht, Z¹ und Z² jeweils unabhängig voneinander für NR, S oder O, R für H, CH₃ oder eine substituierte oder unsubstituierte, lineare oder verzweigte, gesättigte oder ungesättigte Alkylgruppe mit 2 bis 12 C-Atomen oder eine substituierte oder unsubstituierte gesättigte oder ungesättigte Cycloalkylgruppe oder eine substituierte oder unsubstituierte Arylgruppe mit 3 bis 18 C-Atomen, oder eine beliebige lineare oder verzweigte Abfolge von zwei oder mehr der genannten Gruppen, B für eine kovalente Bindung, für CH₂ oder eine substituierte oder unsubstituierte, lineare oder verzweigte, gesättigte oder ungesättigte Alkylengruppe mit 2 bis 12 C-Atomen oder eine substituierte oder unsubstituierte gesättigte oder ungesättigte Cycloalkylengruppe oder eine substituierte oder unsubstituierte Arylengruppe mit 3 bis 18 C-Atomen, oder eine beliebige lineare oder verzweigte Abfolge von zwei oder mehr der genannten Gruppen, n für eine Zahl von 1 bis 20, m für eine Zahl von 1 bis 50 und XY für einen gegenüber NCO-Gruppen inerten Reaktivrest steht, wobei der Reaktivrest unter sauren, neutralen oder basischen Bedingungen eine oder mehrere Schutzgruppen Y freisetzt und der Rest X nach Freisetzung von Y mindestens zwei gegenüber Isocyanaten reaktive Gruppen aufweist, **dadurch gekennzeichnet, dass** die Verbindung als Reaktivrest XY eine Dioxan- oder Dioxolangruppe aufweist.

2. Verbindung nach Anspruch 1, **dadurch gekennzeichnet, daß** Z¹ oder Z² oder beide für O stehen.

3. Verbindung nach Anspruch 1 oder 2, **dadurch gekennzeichnet, daß** B für CH₂ oder einen linearen Alkylrest mit 2 bis 6 C-Atomen steht.

4. Verbindung nach einem der Ansprüche 1 bis 3, **dadurch gekennzeichnet, daß** XY für einen Rest der folgenden Formeln II oder III steht: 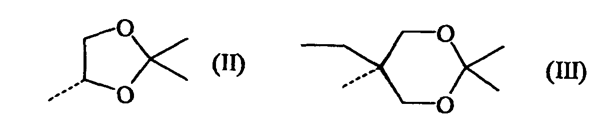 in denen die gestrichelten Linien die Position der kovalenten Bindung zu B anzeigen.

5. Verbindung nach Anspruch 1, herstellbar durch Umsetzung eines mindestens zwei NCO-Gruppen aufweisenden Isocyanats der allgemeinen Formel V
A(-NCO)ₙ (V)
mit mindestens einer Verbindung der allgemeinen Formel VI
HZ²-B-XY (VI),
worin A, Z², B, X ,Y und n gemäß einem der Ansprüche 1 bis 4 definiert sind, wobei das Verhältnis von HZ²- zu NCO-Gruppen so gewählt wird, daß ein Reaktionsprodukt mit mindestes einer freien NCO-Gruppe entsteht, und anschließender Umsetzung des Reaktionsprodukts mit einer Verbindung der Formel XI
L-(Z¹H)ₘ (XI),
worin L, Z1 und m die oben angegebene Bedeutung aufweisen.

6. Verbindung nach Anspruch 5, **dadurch gekennzeichnet, daß** als Verbindung der allgemeinen Formel VI eine Verbindung der allgemeinen Formel VII oder VIII 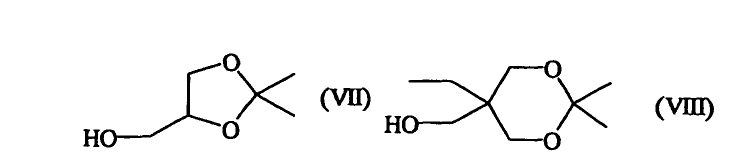 eingesetzt wird.

7. Verfahren zur Herstellung einer Verbindung nach Anspruch 1, **dadurch gekennzeichnet, daß** ein mindestens zwei NCO-Gruppen aufweisendes Isocyanat der allgemeinen Formel V
A(-NCO)ₙ (V)
mit mindestens einer Verbindung der allgemeinen Formel VI
HZ²-B-XY (VI),
worin A, Z², B, X ,Y und n gemäß einem der Ansprüche 1 bis 4 definiert sind, umgesetzt wird, wobei das Verhältnis von HZ²- zu NCO-Gruppen so gewählt wird, daß ein Reaktionsprodukt mit mindestes einer freien NCO-Gruppe entsteht, und anschließend das Reaktionsprodukt mit einer Verbindung der Formel XI
L-(Z¹H)ₘ (XI),
worin L, Z¹ und m die oben angegebene Bedeutung aufweisen, zur Reaktion gebracht wird.

8. Polymerverbindung mit mindestens zwei Urethan- oder Harnstoffgruppen und der, bezogen auf Urethan- oder Harnstoffgruppen, doppelten Anzahl an gegenüber NCO-Gruppen reaktiven funktionellen Gruppen, herstellbar durch Hydrolyse der Verbindung der allgemeinen Formel I gemäß Anspruch 1 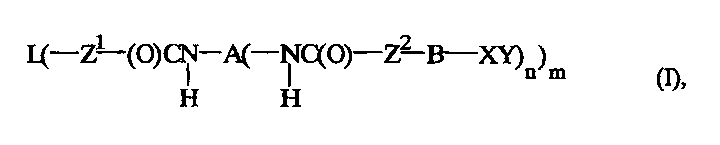 unter sauren, neutralen oder basischen Bedingungen.

9. Polyadditionsprodukt oder Polykondensationsprodukt, herstellbar unter Verwendung einer Polymerverbindung nach Anspruch 8.

10. Verfahren zur Verdopplung von gegenüber Isocyanaten reaktiven Gruppen in von Urethangruppen freien Polymeren, bei dem ein von Urethangruppen freies Polymeres der allgemeinen Formel X
L(Z¹H)ₘ (X),
mit einer Verbindung der allgemeinen Formel XI 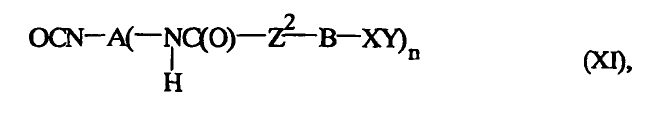 umgesetzt wird, wobei L, Z¹, Z², A, B, X, Y, n und m wie in den Ansprüchen 1- 4 definiert sind.

11. Verwendung einer Verbindung der allgemeinen Formel XI 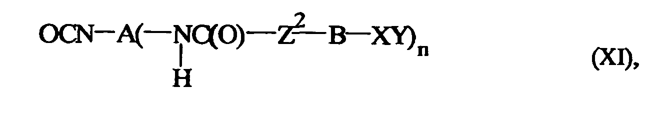 worin Z², A, B, X, Y und n wie in den Ansprüchen 1 - 4 definiert sind, zur Verdopplung der Zahl der gegenüber Isocyanaten reaktiven funktionellen Gruppen in von Urethangruppen freien Polymeren, die mindestens eine gegenüber Isocyanaten reaktive funktionelle Gruppe aufweisen.

## Claims

1. A compound of the formula I 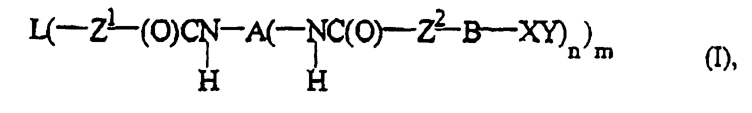 where L is a polymer which is free of urethane groups and has a molecular weight Mₙ of at least 300, or any linear or branched sequence of two or more such polymers, A is a substituted or unsubstituted, linear or branched, saturated or unsaturated alkylene group having from 2 to 12 carbon atoms or a substituted or unsubstituted, saturated or unsaturated cycloalkylene group or a substituted or unsubstituted arylene group having from 3 to 18 carbon atoms or an arylene-alkylene group having from 7 to 18 carbon atoms or a heterocyclic group or any linear or branched sequence of two or more of the groups mentioned, Z¹ and Z² are each, independently of one another, NR, S or O, R is H, CH₃ or a substituted or unsubstituted, linear or branched, saturated or unsaturated alkyl group having from 2 to 12 carbon atoms or a substituted or unsubstituted, saturated or unsaturated cycloalkyl group or a substituted or unsubstituted aryl group having from 3 to 18 carbon atoms, or any linear or branched sequence of two or more of the groups mentioned, B is a covalent bond, CH₂ or a substituted or unsubstituted, linear or branched, saturated or unsaturated alkylene group having from 2 to 12 carbon atoms or a substituted or unsubstituted, saturated or unsaturated cycloalkylene group or a substituted or unsubstituted arylene group having from 3 to 18 carbon atoms, or any linear or branched sequence of two or more of the groups mentioned, n is from 1 to 20, m is from 1 to 50 and XY is a reactive radical which is inert toward NCO groups, where the reactive radical splits off one or more protective groups Y under acidic, neutral or basic conditions and the radical X bears, after Y has been split off, at least two groups which are reactive toward isocyanates, wherein the reactive radical XY is a dioxane, dioxolane or oxazolidine group.

2. The compound according to claim 1, wherein Z¹ or Z² or both is/are O.

3. The compound according to claim 1 or 2, wherein B is CH₂ or a linear alkylene radical having from 2 to 6 carbon atoms.

4. The compound according to any of claims 1 to 3, wherein XY is a radical having one of the formulae II or III: 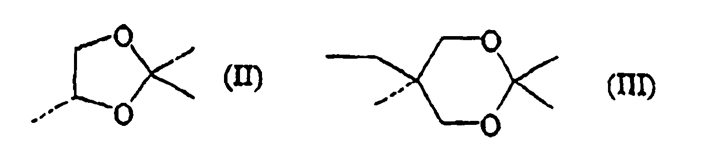 in which the broken lines indicate the position of the covalent bond to B.

5. The compound according to claim 1 which can be prepared by reacting an isocyanate containing at least two NCO groups and having the formula V
A(-NCO)ₙ (V)
with at least one compound of the formula VI
HZ²-B-XY (VI),
where A, Z², B, X, Y and n are as defined in any of claims 1 to 4, wherein the ratio of HZ² groups to NCO groups is selected so as to give a reaction product having at least one free NCO group, and subsequently reacting the reaction product with a compound of the formula XI
L-(Z¹H)ₘ (X),
where L, Z¹ and m are as defined above.

6. The compound according to claim 5, wherein the compound of the formula VI which is used is a compound of the formula VII or VIII.

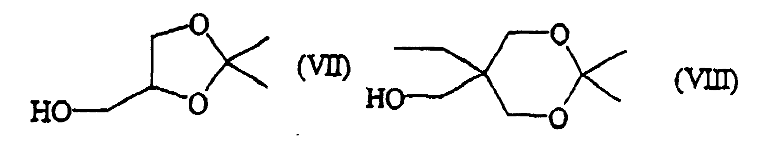

7. A process for preparing a compound according to claim 1, which comprises reacting an isocyanate containing at least two NCO groups and having the formula V
A(-NCO)ₙ (V)
with at least one compound of the formula VI
HZ²-B-XY (VI),
where A, Z², B, X, Y and n are as defined in any of claims 1 to 5, wherein the ratio of HZ² groups to NCO groups is selected so as to give a reaction product having at least one free NCO group, and subsequently reacting the reaction product with a compound of the formula XI
L-(Z¹H)ₘ (X),
where L, Z¹ and m are as defined above.

8. A polymer compound containing at least two urethane or urea groups and having double the number, relative to urethane or urea groups, of functional groups which are reactive toward NCO groups, able to be prepared by hydrolysis of a compound of the formula I according to claim 1 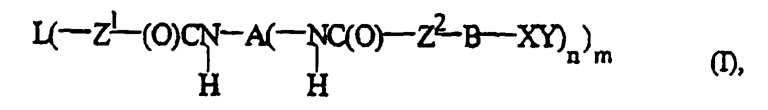 under acidic, neutral or basic conditions.

9. A polyaddition product or polycondensation product which can be prepared using a polymer compound according to claim 8.

10. A process for doubling the number of groups which are reactive toward isocyanates in polymers which are free of urethane groups, which comprises reacting a polymer which is free of urethane groups and has the formula X
L(Z¹H)ₘ (X),
with a compound of the formula XI 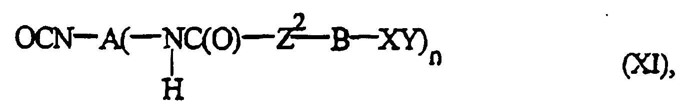 where L, Z¹, Z², A, B, X, Y, n and m are as defined in claims 1 to 4.

11. The use of a compound of the formula XI 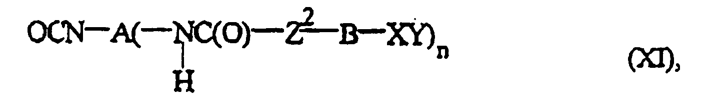 where Z², A, B, X, Y and n are as defined in claims 1 to 4, for doubling the number of functional groups which are reactive toward isocyanates in polymers which are free of urethane groups and have at least one functional group which is reactive toward isocyanates.

## Revendications

1. Composé de la formule générale I : 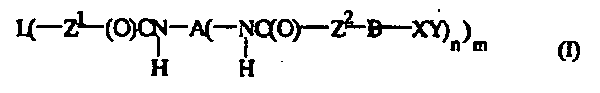 dans laquelle L représente un polymère exempt de groupes uréthane, présentant un poids moléculaire Mₙ d'au moins 300, ou un suite linéaire ou ramifiée quelconque de deux ou de plusieurs de tels polymères, A représente un groupe alkylène substitué ou non substitué, linéaire ou ramifié, saturé ou insaturé, comportant 2 à 12 atomes de C ou un groupe cycloalkylène substitué ou non substitué, saturé ou insaturé, ou un groupe arylène substitué ou non substitué comportant 3 à 18 atomes de C ou un groupe arylènealkylène comportant 7 à 18 atomes de C ou un groupe hétérocyclique ou une suite linéaire ou ramifiée quelconque de deux ou de plusieurs des groupes cités, Z¹ et Z² représentent chacun, indépendamment l'un de l'autre, NR, S ou O, R représente H, CH₃ ou un groupe alkyle substitué ou non substitué, linéaire ou ramifié, saturé ou insaturé, comportant 2 à 12 atomes de C ou un groupe cycloalkyle substitué ou non substitué, saturé ou insaturé, ou un groupe aryle substitué ou non substitué, comportant 3 à 18 atomes de C, ou une suite linéaire ou ramifiée quelconque de deux ou de plusieurs des groupes cités, B représente une liaison covalente, CH₂ ou un groupe alkylène substitué ou non substitué, linéaire ou ramifié, saturé ou insaturé, comportant 2 à 12 atomes de C ou un groupe cycloalkylène substitué ou non substitué, saturé ou insaturé, ou un groupe arylène substitué ou non substitué comportant 3 à 18 atomes de C ou une suite linéaire ou ramifiée quelconque de deux ou de plusieurs des groupes cités, n représente un nombre de 1 à 20, m représente un nombre de 1 à 50 et XY représente un radical réactif inerte vis-à-vis des groupes NCO, le radical réactif libérant dans des conditions acides, neutres ou basiques un ou plusieurs groupes de protection Y, le radical X présentant, après libération de Y, au moins deux groupes réactifs vis-à-vis des isocyanates, **caractérisé en ce que** le composé présente, comme radical réactif XY, un groupe dioxane ou dioxolane.

2. Composé suivant la revendication 1, **caractérisé en ce que** Z¹ ou Z² ou les deux représentent O.

3. Composé suivant la revendication 1 ou 2, **caractérisé en ce que** B représente CH₂ ou un radical alkyle linéaire comportant 2 à 6 atomes de C.

4. Composé suivant l'une des revendications 1 à 3, **caractérisé en ce que** XY représente un radical des formules suivantes II ou III : 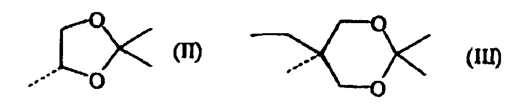 dans lesquelles les lignes pointillées indiquent la position de la liaison covalente à B.

5. Composé suivant la revendication 1, que l'on peut préparer par réaction d'un isocyanate présentant au moins deux groupes NCO de la formule générale V :
A(-NCO)ₙ (V)
avec au moins un composé de la formule générale VI .
HZ²-B-XY (VI)
dans laquelle A, Z², B, X, Y et n sont définis conformément à l'une des revendications 1 à 4, le rapport entre les groupes HZ² et NCO étant choisi de façon à obtenir un produit réactionnel comportant au moins un groupe NCO libre, et par réaction ultérieure du produit réactionnel avec un composé de la formule XI :
L- (Z¹H)ₘ (X)
dans laquelle L, Z¹ et m présentent la signification indiquée ci-dessus.

6. Composé suivant la revendication 5, **caractérisé en ce que**, comme composé de la formule générale VI, on met en oeuvre un composé de la formule générale VII ou VIII :

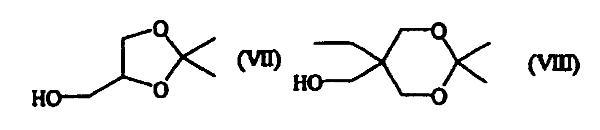

7. Procédé de préparation d'un composé suivant la revendication 1, **caractérisé en ce qu'**un isocyanate présentant au moins deux groupes NCO de la formule générale V :
A(-NCO)ₙ (V)
est amené à réagir avec au moins un composé de la formule générale VI :
HZ²-B-XY (VI)
dans laquelle A, Z², B, X, Y et n sont définis conformément à l'une des revendications 1 à 4, le rapport entre les groupes HZ² et NCO étant choisi de façon à obtenir un produit réactionnel comportant au moins un groupe NCO libre, et **en ce qu'**ensuite le produit réactionnel est amené à réagir avec un composé de la formule XI :
L-(Z¹H)ₘ (X)
dans laquelle L, Z¹ et m présentent la signification indiquée ci-dessus.

8. Composé polymère comportant au moins deux groupes uréthane ou urée et un nombre doublé, par rapport aux groupes uréthane ou urée, de groupes fonctionnels réactifs vis-à-vis des groupes NCO, préparable par hydrolyse du composé de la formule générale I suivant la revendication 1 : 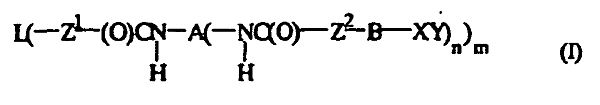 dans des conditions acides, neutres ou basiques.

9. Produit de polyaddition ou de polycondensation, préparable par utilisation d'un composé polymère suivant la revendication 8.

10. Procédé de doublement de groupes réactifs vis-à-vis des isocyanates dans des polymères exempts de groupes uréthane, dans lequel un polymère exempt de groupes uréthane de la formule générale X :
L(Z¹H)ₘ (X)
est mis à réagir avec un composé de la formule générale XI : 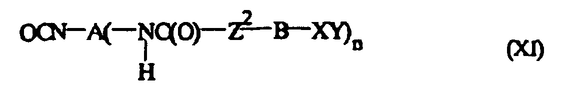 dans laquelle L, Z¹, Z², A, B, X, Y, n et m sont définis comme dans les revendications 1-4.

11. Utilisation d'un composé de la formule générale XI : 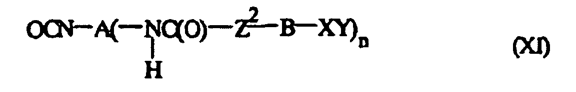 dans laquelle Z², A, B, X, Y et n sont définis comme dans les revendications 1-4, pour doubler le nombre des groupes fonctionnels réactifs vis-à-vis des isocyanates dans des polymères exempts de groupes uréthane, qui présentent au moins un groupe fonctionnel réactif vis-à-vis des isocyanates.
